# EUROPEAN PATENT SPECIFICATION

(11) **EP 4 412 076 B1**
(45) Date of publication and mention of the grant of the patent: **19.08.2026**
(21) Application number: 22875006.3
(22) Date of filing: 28.09.2022
(51) Int. Cl.: H02P 21/05, B60L 15/20, H02P 6/28, H02P 29/50, H02P 6/10

(54) **HARMONIC CURRENT INJECTION METHOD FOR SUPPRESSING HIGH-ORDER NOISE OF VEHICLE, AND COMPUTER-READABLE STORAGE MEDIUM AND APPARATUS**
OBERSCHWINGUNGSSTROMINJEKTIONSVERFAHREN ZUR UNTERDRÜCKUNG VON RAUSCHEN HÖHERER ORDNUNG EINES FAHRZEUGS SOWIE COMPUTERLESBARES SPEICHERMEDIUM UND VORRICHTUNG
PROCÉDÉ D'INJECTION DE COURANT HARMONIQUE POUR SUPPRIMER LE BRUIT D'ORDRE ÉLEVÉ D'UN VÉHICULE ET SUPPORT DE STOCKAGE LISIBLE PAR ORDINATEUR ET APPAREIL

(30) Priority: 29.09.2021 CN 202111150043
(43) Date of publication of application: 07.08.2024
(73) Proprietor: XPT EDS (Hefei) Co., Ltd., Hefei City, Anhui 230601 (CN)
(72) Inventor: LIU, Di, Hefei, Anhui 230601 (CN); WANG, Kai, Hefei, Anhui 230601 (CN); SHEN, Chen, Hefei, Anhui 230601 (CN)
(74) Representative: Vossius & Partner Patentanwälte Rechtsanwälte mbB
(86) International application number: PCT/CN2022/122193
(87) International publication number: WO 2023/051623

(56) References cited:
- EP-A1- 4 412 077
- CN-A- 104 579 080
- CN-A- 104 852 661
- CN-A- 110 729 922
- CN-A- 112 737 458
- CN-A- 113 809 959
- JP-A- 2004 064 909
- JP-A- 2012 135 100
- US-A1- 2002 097 015
- US-A1- 2005 073 280
- US-A1- 2013 119 900
- US-A1- 2016 072 416
- YAN LUOCHENG ET AL: "Torque ripple suppression of permanent magnet synchronous machines by minimal harmonic current injection", IET POWER ELECTRONICS, IET, UK, vol. 12, no. 6, 29 May 2019 (2019-05-29), pages 1368 - 1375, XP006083980, ISSN: 1755-4535, DOI: 10.1049/IET-PEL.2018.5647

## Description

### Technical Field

The disclosure relates to a method for suppressing vehicle noise, and in particular, to a harmonic current injection method for suppressing high-order noise of a vehicle, an apparatus, and a computer-readable storage medium.

### Background Art

A permanent magnet synchronous motor inevitably generates harmonic components of a back electromotive force during ontology design of the motor, and thereby generates harmonic currents in stator windings of the motor. The interaction of the harmonic components of the back electromotive force, the harmonic currents, fundamental components of the back electromotive force, and a fundamental current may cause a high-order torque pulsation on a shaft of the motor, which then leads to a problem of high-order noise in noise, vibration, and harshness (NVH) that affects a vehicle. In order to reduce the noise of the vehicle, a software control means is required to reduce a high-order torque pulsation by means of a harmonic current injection method, so as to suppress the noise. However, existing harmonic current injection methods have a very limited effect on the suppression of high-order noise, particularly high-order noise of a 6^{th} order and 12^{th} order, due to the use of an instruction of a harmonic current given as 0, and there is no better suppression solution yet.

### Summary

Objective of the disclosure: In view of the above-mentioned problem, the disclosure proposes a harmonic current injection method for suppressing high-order noise of a vehicle, an apparatus, and a computer-readable storage medium, which can significantly suppress the high-order noise of the vehicle.

Technical Solution: The technical solution used in the disclosure is a harmonic current injection method for suppressing high-order noise of a vehicle. The method includes the steps as follows.
(1) D-axis and q-axis components of a harmonic current of each order of a fundamental wave of each harmonic wave in a direct-current coordinate system are obtained after coordinate transformation and filter processing of three-phase sampled currents. Step (1) includes the process of:
   sampling U-phase, V-phase, and W-phase currents of the permanent magnet synchronous motor and then subjecting the sampled currents to Clark transformation and Park transformation into a two-phase synchronous rotating coordinate system, to obtain d-axis and q-axis components of a total sampled current including the harmonic currents, separately passing the d-axis and q-axis components of the current through a low-pass filter to obtain d-axis and q-axis components of a fundamental current, and calculating a difference between the d-axis component of the total sampled current and the d-axis component of the fundamental current and a difference between the q-axis component of the total sampled current and the q-axis component of the fundamental current, so as to obtain d-axis and q-axis components of a total harmonic current in the fundamental coordinate system; and then, subjecting the d-axis and q-axis components of the total harmonic current in the fundamental coordinate system to inverse Clark transformation and inverse Park transformation, respectively, into the synchronous rotating coordinate system for each harmonic wave, to obtain direct current forms for d-axis and q-axis components of each harmonic wave.
(2) Given values of the d-axis and q-axis components of the harmonic current of each order are calculated based on a harmonic torque and a rotation speed of a permanent magnet synchronous motor.

A calculation formula for this step is: $\begin{matrix}{T}_{e} = {\sum }_{i = 1 , 5 , 11} {I}_{m i} sin \left(i\left(ωt+θ\right)\right) ⋅ \frac{{\sum }_{j = 1 , 5 , 7 , 11 , 13} {E}_{m j} sin \left(jωt\right)}{Ω} + {\sum }_{i = 1 , 5 , 11} {I}_{m i} sin \left(i\left(ωt+θ-\frac{2}{3}π\right)\right) ⋅ \frac{{\sum }_{j = 1 , 5 , 7 , 11 , 13} {E}_{m j} sin \left(j\left(ωt-\frac{2}{3}π\right)\right)}{Ω} + \\ {\sum }_{i = 1 , 5 , 11} {I}_{m i} sin \left(i\left(ωt+θ+\frac{2}{3}π\right)\right) ⋅ \frac{{\sum }_{j = 1 , 5 , 7 , 11 , 13} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6} + {T}_{12}\end{matrix}$
where *Iₘᵢ* represents a magnitude of an *i*^{th}-order harmonic current, and *Eₘᵢ* represents a magnitude of an *i*^{th}-order harmonic back electromotive force; *T*₆ represents a 6^{th}-order torque, *T*₁₂ represents a 12^{th}-order torque, *T*ₑ represents an electromagnetic torque, ω represents an electrical angular velocity of the motor, and Ω represents a mechanical angular velocity of the motor; and θ represents an initial phase of a fundamental wave, *nₚ* represents a number of pole pairs of the motor, *L_{d}* represents a direct-axis inductance, and *L_{q}* represents a quadrature-axis inductance;
and the 6^{th}-order torque *T*₆ and the 12^{th}-order torque *T*₁₂ are respectively expressed as: ${T}_{6} = \frac{3}{2} {n}_{p} \left({L}_{d}-{L}_{q}\right) \left({i}_{d 1}{i}_{q 5}+{i}_{d 5}{i}_{q 1}\right)$ ${T}_{12} = \frac{3}{2} {n}_{p} \left({L}_{d}-{L}_{q}\right) \left({i}_{d 1}{i}_{q 11}+{i}_{d 11}{i}_{q 1}+{i}_{d 5}{i}_{q 5}\right)$ where ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$ ${i}_{d 11} = {I}_{m 11} sin \left(12ωt+11θ+{θ}_{11}\right)$ ${i}_{q 11} = {I}_{m 11} cos \left(12ωt+11θ+{θ}_{11}\right)$
where *θ*₅ represents an initial phase of a 5^{th} harmonic wave, and *θ*₁₁ represents an initial phase of an 11^{th} harmonic wave; and
Letting *i_{d7} = 0, i_{q7} = 0, i*_{*d*13} *=* 0, and *i*_{*q*13} = 0, the above equations can be solved numerically to yield given values of d-axis and q-axis components of the 5^{th} harmonic current and given values of d-axis and q-axis components of the 11^{th} harmonic current. In other words, when given values of d-axis and q-axis components of a 7^{th} harmonic current and given values of d-axis and q-axis components of a 13^{th} harmonic current are set to 0, the given values of the d-axis and q-axis components of the 5^{th} harmonic current and the given values of the d-axis and q-axis components of the 11^{th} harmonic current are obtained. Then, the given values of the d-axis and q-axis components of the 5^{th} harmonic current, the given values of the d-axis and q-axis components of the 7^{th} harmonic current, the given values of the d-axis and q-axis components of the 11^{th} harmonic current, and the given values of the d-axis and q-axis components of the 13^{th} harmonic current are obtained.

(3) For noise induced by high-order torque pulsations of a 6^{th} order and a 12^{th} order, the noise is suppressed through control of the 5^{th} and 7^{th} harmonic currents with regard to a 6^{th}-order harmonic torque, and the noise is suppressed through control of the 11^{th} and 13^{th} harmonic currents with regard to a 12^{th}-order harmonic torque. Outputs of the d-axis and q-axis components of the harmonic current of each order are controlled by a proportional-integral regulator, closed-loop regulation is performed by using given values of d-axis and q-axis components of the 5^{th} harmonic current and given values of d-axis and q-axis components of the 7^{th} harmonic current obtained in step (2) as given reference values for harmonic current loops of both orders, respectively, by using real values of the d-axis and q-axis components of the 5^{th} harmonic current and real values of the d-axis and q-axis components of the 7^{th} harmonic current obtained in a step of transformation and extraction of harmonic currents as real feedback values for the harmonic current loops of both of the orders, and by using net inputs of their respective differences as inputs to proportional-integral regulators, then outputs of the proportional-integral regulators, as values of harmonic voltages, are subjected to inverse Park transformation into a fundamental coordinate system, and then the values of the harmonic voltages and fundamental voltages are output in a superimposed manner, such that suppression of noise induced by the high-order torque pulsation of the 6th order is implemented. The noise induced by the high-order torque pulsation of the 12^{th} order can be suppressed by replacing the 5^{th} and 7^{th} harmonic currents in the above step with the 11^{th} and 13^{th} harmonic currents. With the same method, the noise induced by the high-order torque pulsations of the 6^{th} order and 12^{th} order can be simultaneously suppressed through simultaneous control of the 5^{th} 7^{th}, 11^{th}, and 13^{th} harmonic currents.

Correspondingly, there is proposed a computer-readable storage medium. The computer-readable storage medium has stored thereon a harmonic current injection control program for suppressing high-order noise of a vehicle, where the harmonic current injection control program causes the steps of the above harmonic current injection method to be performed.

The disclosure further proposes a control apparatus for a permanent magnet synchronous motor. The apparatus includes a signal collection module, a memory, a processor, a proportional-integral regulator, a controller, and a harmonic current injection control program stored on the memory and executable on the processor, where the signal collection module is configured to sample a three-phase current signal and then send same to the processor, the processor executes the harmonic current injection control program to output a voltage control signal, the controller receives the voltage control signal sent by the processor, and accordingly controls a voltage of the permanent magnet synchronous motor, and the harmonic current injection control program causes the steps of the above harmonic current injection method to be performed. The invention is defined by the method of claim 1, computer-media of claim 3 and the device of claim 4. Preferred embodiment of invention is disclosed in dependent claim 2.

Beneficial effects: The disclosure has the following advantages over the prior art: In the disclosure, a relationship between a harmonic current and a harmonic torque is provided, and given values for each higher-order harmonic current required to suppress the high-order noise of the vehicle are then calculated based on a relational equation; closed-loop regulation and control is further performed on both d-axis and q-axis components of each harmonic current, and then harmonic voltage components output from a harmonic current loop are separately transformed into a fundamental coordinate system; and finally, the harmonic voltage components and fundamental voltage components output from a fundamental current loop are output in a superimposed manner. The harmonic current injection method of the disclosure achieves an excellent effect in a scenario of suppressing vehicle noise. Prior art document US 2005/073280 A1 discloses the features of the preamble of claims 1, 3 and 4.

### Brief Description of the Drawings

FIG. 1 is a control block diagram of a motor control apparatus for suppressing 6^{th}-order torque pulsation noise according to the disclosure;
FIG. 2 is a control block diagram of a motor control apparatus for suppressing 12^{th}-order torque pulsation noise according to the disclosure; and
FIG. 3 is a flowchart of a harmonic current injection method in an embedded permanent magnet synchronous motor according to the disclosure.

### Detailed Description of Embodiments

The technical solutions of the disclosure will be further described below with reference to the accompanying drawings and embodiments.

The harmonic current injection method for suppressing high-order noise of a vehicle according to the disclosure includes the steps as follows.
(1) Transformation and extraction of harmonic currents.

Clark transformation is first performed on three-phase sampled currents and then a harmonic current content is separated by means of Park transformation, and the harmonic current components are then transformed into a direct-current coordinate system required for each harmonic wave, to extract d-axis and q-axis components of a harmonic current of each order.

U-phase, V-phase, and W-phase currents of the permanent magnet synchronous motor are sampled and then subjected to Clark transformation and Park transformation into a two-phase synchronous rotating coordinate system, to obtain d-axis and q-axis components of a total sampled current including the harmonic currents, the d-axis and q-axis components of the current are separately passed through a low-pass filter to obtain d-axis and q-axis components of a fundamental current, and a difference between the d-axis component of the total sampled current and the d-axis component of the fundamental current and a difference between the q-axis component of the total sampled current and the q-axis component of the fundamental current are calculated so as to obtain d-axis and q-axis components of a total harmonic current in the fundamental coordinate system; and then, the d-axis and q-axis components of the total harmonic current in the fundamental coordinate system are subjected to inverse Clark transformation and inverse Park transformation, respectively, into the synchronous rotating coordinate system for the 5^{th,} 7^{th}, 11^{th}, and 13^{th} harmonic waves, to obtain direct current forms for the d-axis and q-axis components of each harmonic wave.

(2) Given values of the d-axis and q-axis components of the 5^{th} harmonic current, given values of the d-axis and q-axis components of the 7^{th} harmonic current, given values of the d-axis and q-axis components of the 11^{th} harmonic current, and given values of the d-axis and q-axis components of the 13^{th} harmonic current are calculated, and a relationship between a harmonic torque and a parameter such as a rotation speed is provided, that is, $\begin{matrix}{T}_{e} = {\sum }_{i = 1 , 5 , 11} {I}_{m i} sin \left(i\left(ωt+θ\right)\right) ⋅ \frac{{\sum }_{j = 1 , 5 , 7 , 11 , 13} {E}_{m j} sin \left(jωt\right)}{Ω} + {\sum }_{i = 1 , 5 , 11} {I}_{m i} sin \left(i\left(ωt+θ-\frac{2}{3}π\right)\right) ⋅ \frac{{\sum }_{j = 1 , 5 , 7 , 11 , 13} {E}_{m j} sin \left(j\left(ωt-\frac{2}{3}π\right)\right)}{Ω} + \\ {\sum }_{i = 1 , 5 , 11} {I}_{m i} sin \left(i\left(ωt+θ+\frac{2}{3}π\right)\right) ⋅ \frac{{\sum }_{j = 1 , 5 , 7 , 11 , 13} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6} + {T}_{12}\end{matrix}$ where *T*₆ represents a 6^{th}-order torque, *T*₁₂ represents a 12^{th}-order torque, Eₘ₁ represents a magnitude of a fundamental back electromotive force, Eₘ₅ represents a magnitude of a 5^{th} harmonic back electromotive force, Eₘ₇ represents a magnitude of a 7^{th} harmonic back electromotive force, Eₘ₁₁ represents a magnitude of an 11^{th} harmonic back electromotive force, Eₘ₁₃ represents a magnitude of a 13^{th} harmonic back electromotive force, Iₘ₁ is a magnitude of a fundamental current, Iₘ₅ is a magnitude of a 5^{th} harmonic current, Iₘ₁₁ is a magnitude of an 11^{th} harmonic current, *T*ₑ represents an electromagnetic torque, *ω* represents an electrical angular velocity of the motor, and Ω represents a mechanical angular velocity of the motor; and θ represents an initial phase of a fundamental wave, *nₚ* represents a number of pole pairs of the motor, *L_{d}* represents a direct-axis inductance, and *L_{q}* represents a quadrature-axis inductance.

*T*₆ and *T*₁₂ are respectively expressed as: ${T}_{6} = \frac{3}{2} {n}_{p} \left({L}_{d}-{L}_{q}\right) \left({i}_{d 1}{i}_{q 5}+{i}_{d 5}{i}_{q 1}\right)$ ${T}_{12} = \frac{3}{2} {n}_{p} \left({L}_{d}-{L}_{q}\right) \left({i}_{d 1}{i}_{q 11}+{i}_{d 11}{i}_{q 1}+{i}_{d 5}{i}_{q 5}\right)$ where ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$ ${i}_{d 11} = {I}_{m 11} sin \left(12ωt+11θ+{θ}_{11}\right)$ ${i}_{q 11} = {I}_{m 11} cos \left(12ωt+11θ+{θ}_{11}\right)$ where *θ*₅ represents an initial phase of the 5^{th} harmonic current, and *θ*₁₁ represents an initial phase of the 11^{th} harmonic current.

Letting *i*_{*d*7} *= 0, i*_{*q*7} *= 0, i*_{*d*13} = 0, and *i*_{*q*13} = 0, the above equations are combined and then solved by means of MATLAB, to obtain *i*_{*d*5}*, i*_{*q*5}*, i*_{*d*11}*,* and *i*_{*g*11}*.* In other words, when given values of d-axis and q-axis components of a 7^{th} harmonic current and given values of d-axis and q-axis components of a 13^{th} harmonic current are set to 0, the given values of the d-axis and q-axis components of the 5^{th} harmonic current and the given values of the d-axis and q-axis components of the 11^{th} harmonic current are obtained. Then, the given values of the d-axis and q-axis components of the 5^{th} harmonic current, the given values of the d-axis and q-axis components of the 7^{th} harmonic current, the given values of the d-axis and q-axis components of the 11^{th} harmonic current, and the given values of the d-axis and q-axis components of the 13^{th} harmonic current are obtained.

The above eight values are used as given values for eight harmonic current loops, i.e. i_{*d*5}*_{th_ref},* i_{*q*5}*_{th_ref},* i_{*d*7}*_{th_ref},* i_{*d*7}*_{th_ref},* i_{*d*11}*_{th_ref},* i_{*q*11}*_{th_ref},* i_{*d*13}*_{th_ref},* and i_{*q*13*th*_}*_{ref}.*

Therefore, numerical relationships between the d-axis and q-axis components of a harmonic current of each order and the parameters are obtained, where n is a rotation speed, and Ω = 2πn: ${i}_{d 5 th _ ref} = {f}_{1} \left({T}_{6}, {E}_{m 5}, {E}_{m 7}, {T}_{e}, n\right)$ ${i}_{q 5 th _ ref} = {g}_{1} \left({T}_{6}, {E}_{m 5}, {E}_{m 7}, {T}_{e}, n\right)$ ${i}_{d 7 th _ ref} = {f}_{2} \left({T}_{6}, {E}_{m 5}, {E}_{m 7}, {T}_{e}, n\right)$ ${i}_{d 7 th _ ref} = {g}_{2} \left({T}_{6}, {E}_{m 5}, {E}_{m 7}, {T}_{e}, n\right)$ ${i}_{d 11 th _ ref} = {f}_{3} \left({T}_{12}, {E}_{m 11}, {E}_{m 13}, {T}_{e}, n\right)$ ${i}_{q 11 th _ ref} = {g}_{3} \left({T}_{12}, {E}_{m 11}, {E}_{m 13}, {T}_{e}, n\right)$ ${i}_{d 13 th _ ref} = {f}_{4} \left({T}_{12}, {E}_{m 11}, {E}_{m 13}, {T}_{e}, n\right)$ ${i}_{q 13 th _ ref} = {g}_{4} \left({T}_{12}, {E}_{m 11}, {E}_{m 13}, {T}_{e}, n\right)$

In order to simplify the calculation performed during actual injection, a given value of each high-order harmonic current required to suppress the high-order noise of the vehicle under conditions of different torques and different rotation speeds can be calculated according to a harmonic torque equation, and on this basis, a two-dimensional table with the torque as a horizontal coordinate and the rotation speed as a vertical coordinate can be made. A 6^{th}-order harmonic torque is mainly a function of the 5^{th} and 7^{th} harmonic currents, and a 12^{th}-order harmonic torque is mainly a function of the 11^{th} and 13^{th} harmonic currents. Based on the decomposition of each harmonic wave into d-axis and q-axis components, a total of eight two-dimensional tables are made for the d-axis component of the 5^{th} current harmonic, the q-axis component of the 5^{th} current harmonic, the d-axis component of the 7^{th} current harmonic, the q-axis component of the 7^{th} current harmonic, the d-axis component of the 11^{th} current harmonic, the q-axis component of the 11^{th} current harmonic, the d-axis component of the 13^{th} current harmonic, and the q-axis component of the 13^{th} current harmonic.

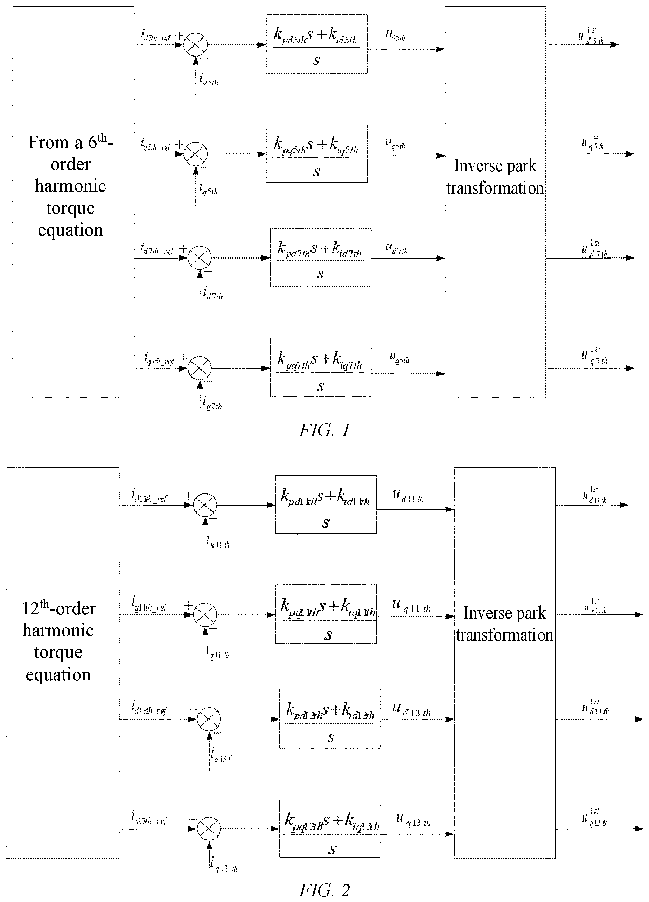

(3) Regulation control of a harmonic current loop. As shown in FIG. 1, proportional-integral regulators are used to perform closed-loop regulation by using given values of the d-axis and q-axis components of the 5^{th} harmonic current and given values of the d-axis and q-axis components of the 7^{th} harmonic current obtained in the step of calculation of given values for harmonic currents as given reference values for harmonic current loops of both orders, respectively, by using real values of the d-axis and q-axis components of the 5^{th} harmonic current and real values of the d-axis and q-axis components of the 7^{th} harmonic current obtained in the step of transformation and extraction of harmonic currents as real feedback values for harmonic current loops of both of the orders, and by using net inputs of their respective differences as inputs to the proportional-integral regulators. Outputs of the proportional-integral regulators, as values of harmonic voltages, are subjected to inverse Park transformation into a fundamental coordinate system, and then the values of the harmonic voltages and fundamental voltages are output in a superimposed manner.

FIG. 2 is a control block diagram of a motor control apparatus for suppressing 12^{th}-order torque pulsation noise according to the disclosure. Proportional-integral regulators are used to perform closed-loop regulation by using given values of the d-axis and q-axis components of the 11^{th} harmonic current and given values of the d-axis and q-axis components of the 13^{th} harmonic current obtained in the step of calculation of given values for harmonic currents as given reference values for harmonic current loops of both orders, respectively, by using real values of the d-axis and q-axis components of the 11^{th} harmonic current and real values of the d-axis and q-axis components of the 13^{th} harmonic current obtained in the step of transformation and extraction of harmonic currents as real feedback values for harmonic current loops of both of the orders, and by using net inputs of their respective differences as inputs to the proportional-integral regulators. Outputs of the proportional-integral regulators, as values of harmonic voltages, are subjected to inverse Park transformation into a fundamental coordinate system, and then the values of the harmonic voltages and fundamental voltages are output in a superimposed manner.

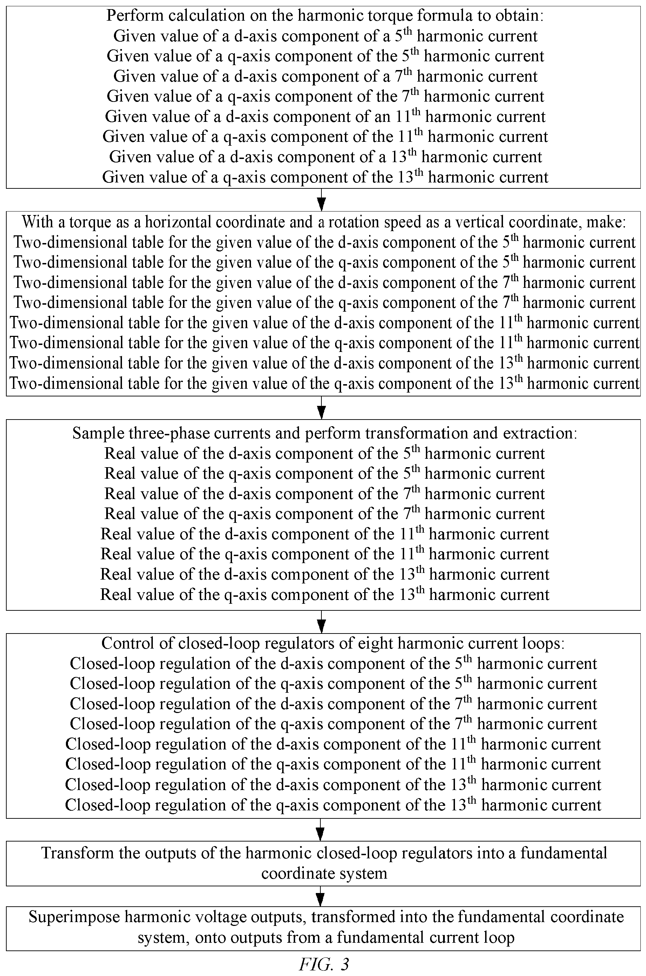

FIG. 3 is a flowchart of a harmonic current injection method in an embedded permanent magnet synchronous motor according to the disclosure. Furthermore, closed-loop regulation is performed on the 5^{th}, 7^{th}, 11^{th}, and 13^{th} harmonic currents, to implement effective suppression of noise induced by high-order torque pulsations of the 6^{th} order and 12^{th} order.

Correspondingly, the control apparatus for a permanent magnet synchronous motor according to the disclosure includes a signal collection module, a memory, a processor, a controller, and a harmonic current injection control program stored on the memory and executable on the processor, where the signal collection module is configured to sample a three-phase current signal and then send same to the processor, the controller receives a voltage control signal sent by the processor, and accordingly controls a voltage of the permanent magnet synchronous motor, and the harmonic current injection control program causes the steps of the above harmonic current injection method to be performed.

The above embodiments are illustrated with an embedded permanent magnet synchronous motor as an example.

The disclosure is described with reference to the flowchart and/or block diagram of the method, device (system), and computer program product according to the embodiments of the disclosure. It is to be understood that each of the processes and/or blocks in the flowchart and/or block diagram, and a combination of processes and/or blocks in the flowchart and/or block diagram, may be implemented by computer program instructions. These computer program instructions can be provided to a processor of a general-purpose computer, a dedicated computer, an embedded processor, or another programmable data processing device to form a machine, so that the instructions executed by the processor of the computer or the another programmable data processing device produce an apparatus for implementing the functions specified in one or more processes of the flowchart and/or one or more blocks of the block diagram.

These computer program instructions may also be stored in a computer-readable memory which directs the computer or the another programmable data processing device to operate in a particular manner, such that the instructions stored in the computer-readable memory produce an article of manufacture including an instructing apparatus. The instructing apparatus implements the functions specified in one or more processes of the flowchart and/or one or more blocks of the block diagram.

These computer program instructions may also be loaded onto the computer or the another programmable data processing device, such that a series of operational steps are performed on the computer or the another programmable device to produce computer-implemented processing, and the instructions executed on the computer or the another programmable device thus provide steps for implementing the functions specified in one or more processes of the flowchart and/or one or more blocks of the block diagram.

## Claims

1. A harmonic current injection method for suppressing high-order noise of a vehicle, the method comprising the following steps:
(1) obtaining d-axis and q-axis components of a harmonic current of each order of a fundamental wave of each harmonic wave in a direct-current coordinate system after coordinate transformation and filter processing of three-phase sampled currents;
(2) calculating given values of the d-axis and q-axis components of the harmonic current of each order based on a harmonic torque and a rotation speed of a permanent magnet synchronous motor; and
(3) controlling outputs of the d-axis and q-axis components of the harmonic current of each order by a proportional-integral regulator, performing closed-loop regulation by using given values of d-axis and q-axis components of a 5^{th} harmonic current, given values of d-axis and q-axis components of a 7^{th} harmonic current, given values of d-axis and q-axis components of an 11^{th} harmonic current, and given values of d-axis and q-axis components of a 13^{th} harmonic current obtained in step (2) as given reference values for harmonic current loops of both orders, respectively, by using real values of the d-axis and q-axis components of the 5^{th} harmonic current, real values of the d-axis and q-axis components of the 7^{th} harmonic current, real values of the d-axis and q-axis components of the 11^{th} harmonic current and real values of the d-axis, and q-axis components of the 13^{th} harmonic current obtained in a step of transformation and extraction of harmonic currents as real feedback values for the harmonic current loops of both of the orders, and by using net inputs of their respective differences as inputs to proportional-integral regulators, then subjecting outputs of the proportional-integral regulators, as values of harmonic voltages, to inverse Park transformation into a fundamental coordinate system, and then outputting the values of the harmonic voltages and fundamental voltages in a superimposed manner, such that noise induced by high-order torque pulsations of a 6^{th} order and a 12^{th} order is suppressed, and
**characterized by**
calculating given values of a d-axis component and a q-axis component of the 5^{th} harmonic current and the 11^{th} harmonic current in step (2) is performed by combining the following electromagnetic torque equations and solving the combined equations under a condition that the d-axis component and the q-axis component of the 7^{th} harmonic current and the 13^{th} harmonic current are set to zero, thereby determining the d-axis component and the q-axis component of the 5^{th} harmonic current and the 11^{th} harmonic current for subsequent harmonic current superposition: $\begin{matrix}{T}_{e} = {\sum }_{i = 1 , 5 , 11} {I}_{m i} sin \left(i\left(ωt+θ\right)\right) ⋅ \frac{{\sum }_{j = 1 , 5 , 7 , 11 , 13} {E}_{m j} sin \left(jωt\right)}{Ω} + {\sum }_{i = 1 , 5 , 11} {I}_{m i} sin \left(i\left(ωt+θ-\frac{2}{3}π\right)\right) ⋅ \frac{{\sum }_{j = 1 , 5 , 7 , 11 , 13} {E}_{m j} sin \left(j\left(ωt-\frac{2}{3}π\right)\right)}{Ω} + \\ {\sum }_{i = 1 , 5 , 11} {I}_{m i} sin \left(i\left(ωt+θ+\frac{2}{3}π\right)\right) ⋅ \frac{{\sum }_{j = 1 , 5 , 7 , 11 , 13} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6} + {T}_{12}\end{matrix}$
wherein *Iₘᵢ* represents a magnitude of an *i*^{th}-order harmonic current, and *Eₘᵢ* represents a magnitude of an *i*^{th}-order harmonic back electromotive force; *T*₆ represents a 6^{th}-order torque, *T*₁₂ represents a 12^{th}-order torque, *Tₑ* represents an electromagnetic torque, ω represents an electrical angular velocity of the motor, and Ω represents a mechanical angular velocity of the motor; and θ represents an initial phase of a fundamental wave, *nₚ* represents a number of pole pairs of the motor, *L_{d}* represents a direct-axis inductance, and *L_{q}* represents a quadrature-axis inductance;
and the 6^{th}-order torque *T*₆ and the 12^{th}-order torque *T*₁₂ are respectively expressed as: ${T}_{6} = \frac{3}{2} {n}_{p} \left({L}_{d}-{L}_{q}\right) \left({i}_{d 1}{i}_{q 5}+{i}_{d 5}{i}_{q 1}\right)$ ${T}_{12} = \frac{3}{2} {n}_{p} \left({L}_{d}-{L}_{q}\right) \left({i}_{d 1}{i}_{q 11}+{i}_{d 11}{i}_{q 1}+{i}_{d 5}{i}_{q 5}\right)$
wherein ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$ ${i}_{d 11} = {I}_{m 11} sin \left(12ωt+11θ+{θ}_{11}\right)$ ${i}_{q 11} = {I}_{m 11} cos \left(12ωt+11θ+{θ}_{11}\right)$
wherein *θ*₅ represents an initial phase of the 5^{th} harmonic wave, and *θ*₁₁ represents an initial phase of the 11th harmonic wave.

2. The harmonic current injection method for suppressing high-order noise of a vehicle according to claim 1, wherein step (1) comprises the process of: sampling U-phase, V-phase, and W-phase currents of the permanent magnet synchronous motor and then subjecting the sampled currents to Clark transformation and Park transformation into a two-phase synchronous rotating coordinate system, to obtain d-axis and q-axis components of a total sampled current comprising the harmonic currents, separately passing the d-axis and q-axis components of the current through a low-pass filter to obtain d-axis and q-axis components of a fundamental current, and calculating a difference between the d-axis component of the total sampled current and the d-axis component of the fundamental current and a difference between the q-axis component of the total sampled current and the q-axis component of the fundamental current, so as to obtain d-axis and q-axis components of a total harmonic current in the fundamental coordinate system; and then, subjecting the d-axis and q-axis components of the total harmonic current in the fundamental coordinate system to inverse Clark transformation and inverse Park transformation, respectively, into the synchronous rotating coordinate system for a harmonic wave of each order, to obtain direct current forms for d-axis and q-axis components of each harmonic wave.

3. A computer-readable storage medium, having stored thereon a harmonic current injection control program for suppressing high-order noise of a vehicle, and
**characterized in that**
the harmonic current injection control program causes the steps of a harmonic current injection method according to claim 1 or 2 to be performed.

4. A control apparatus for a permanent magnet synchronous motor, the apparatus comprising a signal collection module, a memory, a processor, a proportional-integral regulator, a controller, and a harmonic current injection control program stored on the memory and executable on the processor, wherein the signal collection module is configured to sample a three-phase current signal and then send same to the processor, the processor executes the harmonic current injection control program to output a voltage control signal, the controller receives the voltage control signal and accordingly controls a voltage of the permanent magnet synchronous motor, and
**characterized in that**
the harmonic current injection control program causes the steps of a harmonic current injection method according to claim 1 or 2 to be performed.

## Patentansprüche

1. Oberschwingungsstrominjektionsverfahren zum Unterdrücken von Rauschen hoher Ordnung eines Fahrzeugs, wobei das Verfahren die folgenden Schritte umfasst:
(1) Erhalten von d-Achsen- und q-Achsen-Komponenten eines Oberschwingungsstroms jeder Ordnung einer Grundwelle jeder Oberwelle in einem Gleichstrom-Koordinatensystem nach Koordinatentransformation und Filterverarbeitung von dreiphasigen abgetasteten Strömen;
(2) Berechnen gegebener Werte der d-Achsen- und q-Achsen-Komponenten des Oberschwingungsstroms jeder Ordnung basierend auf einem Oberschwingungsdrehmoment und einer Drehzahl eines Permanentmagnetsynchronmotors; und
(3) Steuern von Ausgaben der d-Achsen- und q-Achsen-Komponenten des Oberschwingungsstroms jeder Ordnung durch einen Proportional-Integral-Regler, Durchführen einer Regelung mit geschlossenem Regelkreis unter Verwendung gegebener Werte von d-Achsen- und q-Achsen-Komponenten eines Oberschwingungsstroms 5. Ordnung, gegebener Werte von d-Achsen- und q-Achsen-Komponenten eines Oberschwingungsstroms 7. Ordnung, gegebener Werte von d-Achsen- und q-Achsen-Komponenten eines Oberschwingungsstroms 11. Ordnung und gegebener Werte von d-Achsen- und q-Achsen-Komponenten eines Oberschwingungsstroms 13. Ordnung, die in Schritt (2) erhalten werden, jeweils als gegebene Referenzwerte für Oberschwingungsstromschleifen beider Ordnungen, unter Verwendung von Realwerten der d-Achsen- und q-Achsen-Komponenten des Oberschwingungsstroms 5. Ordnung, Realwerten der d-Achsen- und q-Achsen-Komponenten des Oberschwingungsstroms 7. Ordnung, Realwerten der d-Achsen- und q-Achsen-Komponenten des Oberschwingungsstroms 11. Ordnung und Realwerten und q-Achsenkomponenten des Oberschwingungsstroms 13. Ordnung, die in einem Schritt der Transformation und Extraktion von Oberschwingungsströmen als reelle Rückkopplungswerte für die Oberschwingungsstromschleifen beider Ordnungen erhalten werden, und unter Verwendung von Nettoeingaben ihrer jeweiligen Differenzen als Eingaben in Proportional-Integral-Regler, dann Anwenden einer inversen Park-Transformation in ein Grundkoordinatensystem auf Ausgaben der Proportional-Integral-Regler als Werte von Oberschwingungsspannungen, und dann Ausgeben der Werte der Oberschwingungsspannungen und Grundspannungen in einer überlagerten Weise, so dass Rauschen, das durch Drehmomentpulsationen hoher Ordnung einer 6. Ordnung und einer 12. Ordnung induziert wird, unterdrückt wird, und
**dadurch gekennzeichnet, dass**
das Berechnen gegebener Werte einer d-Achsenkomponente und einer q-Achsenkomponente des Oberschwingungsstroms 5. Ordnung und des Oberschwingungsstroms 11. Ordnung in Schritt (2) durch Kombinieren der folgenden elektromagnetischen Drehmomentgleichungen und Lösen der kombinierten Gleichungen unter der Bedingung, dass die d-Achsenkomponente und die q-Achsenkomponente des Oberschwingungsstroms 7. Ordnung und des Oberschwingungsstroms 13. Ordnung auf null gesetzt sind, durchgeführt wird, wodurch die d-Achsenkomponente und die q-Achsenkomponente des Oberschwingungsstroms 5. Ordnung und des Oberschwingungsstroms 11. Ordnung für eine nachfolgende Oberschwingungsstromüberlagerung berechnet werden: $\begin{matrix}{T}_{e} = {\sum }_{i = 1.5.11} {I}_{m i} sin \left(i\left(ωt+θ\right)\right) ⋅ \frac{{\sum }_{j = 1.5.7.11.13} {E}_{m j} sin \left(jωt\right)}{Ω} + {\sum }_{i = 1.5.11} {I}_{m i} sin \left(i\left(ωt+θ-\frac{2}{3}π\right)\right) ⋅ \frac{{\sum }_{j = 1.5.7.11.13} {E}_{m j} sin \left(j\left(ωt-\frac{2}{3}π\right)\right)}{Ω} + \\ {\sum }_{i = 1.5.11} {I}_{m i} sin \left(i\left(ωt+θ+\frac{2}{3}π\right)\right) ⋅ \frac{{\sum }_{j = 1.5.7.11.13} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6} + {T}_{12}\end{matrix}$
wobei Iₘᵢ einen Betrag eines Oberschwingungsstroms i-ter Ordnung repräsentiert und Eₘᵢ einen Betrag einer gegenelektromotorischen Kraft einer Oberschwingung i-ter Ordnung repräsentiert; T₆ ein Drehmoment 6. Ordnung repräsentiert, T₁₂ ein Drehmoment 12. Ordnung repräsentiert, Tₑ ein elektromagnetisches Drehmoment repräsentiert, ω eine elektrische Winkelgeschwindigkeit des Motors repräsentiert und Ω eine mechanische Winkelgeschwindigkeit des Motors repräsentiert; und θ eine Anfangsphase einer Grundwelle repräsentiert, nₚ eine Anzahl von Polpaaren des Motors repräsentiert, L_{d} eine Direktachsen-Induktivität repräsentiert und L_{q} eine Quadraturachsen-Induktivität repräsentiert;
und das Drehmoment 6. Ordnung T₆ und das Drehmoment 12. Ordnung T₁₂ jeweils wie folgt ausgedrückt werden: ${T}_{6} = \frac{3}{2} {n}_{p} \left({L}_{d}-{L}_{q}\right) \left({i}_{d 1}{i}_{q 5}+{i}_{d 5}{i}_{q 1}\right)$ ${T}_{12} = \frac{3}{2} {n}_{p} \left({L}_{d}-{L}_{q}\right) \left({i}_{d 1}{i}_{q 11}+{i}_{d 11}{i}_{q 1}+{i}_{d 5}{i}_{q 5}\right)$ wobei ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$ ${i}_{d 11} = {I}_{m 11} sin \left(12ωt+11θ+{θ}_{11}\right)$ ${i}_{q 11} = {I}_{m 11} cos \left(12ωt+11θ+{θ}_{11}\right)$
wobei θ₅ eine Anfangsphase der Oberwelle 5. Ordnung repräsentiert und θ₁₁ eine Anfangsphase der Oberwelle 11. Ordnung repräsentiert.

2. Oberschwingungsstrominjektionsverfahren zum Unterdrücken von Rauschen hoher Ordnung eines Fahrzeugs nach Anspruch 1, wobei Schritt (1) den folgenden Prozess umfasst: Abtasten von U-Phasen-, V-Phasen- und W-Phasenströmen des Permanentmagnetsynchronmotors und dann Anwenden einer Clark-Transformation und Park-Transformation in ein zweiphasiges synchrones rotierendes Koordinatensystem auf die abgetasteten Ströme, um d-Achsen- und q-Achsen-Komponenten eines gesamten abgetasteten Stroms zu erhalten, der die Oberschwingungsströme umfasst, separates Leiten der d-Achsen- und q-Achsen-Komponenten des Stroms durch ein Tiefpassfilter, um d-Achsen- und q-Achsen-Komponenten eines Grundstroms zu erhalten, und Berechnen einer Differenz zwischen der d-Achsenkomponente des gesamten abgetasteten Stroms und der d-Achsenkomponente des Grundstroms und einer Differenz zwischen der q-Achsenkomponente des gesamten abgetasteten Stroms und der q-Achsenkomponente des Grundstroms, um d-Achsenkomponenten und q-Achsenkomponenten eines gesamten Oberschwingungsstroms in dem Grundkoordinatensystem zu erhalten; und dann Anwenden einer inversen Clark-Transformation und einer inversen Park-Transformation in das synchrone rotierende Koordinatensystem für eine Oberschwingungswelle jeder Ordnung auf die d-Achsen- und q-Achsen-Komponenten des gesamten Oberschwingungsstroms in dem Grundkoordinatensystem, um Gleichstromformen für d-Achsen- und q-Achsen-Komponenten jeder Oberwelle zu erhalten.

3. Computerlesbares Speichermedium, auf dem ein Oberschwingungsstrominjektionssteuerprogramm zum Unterdrücken von Rauschen hoher Ordnung eines Fahrzeugs gespeichert ist, und
**dadurch gekennzeichnet, dass**
das Oberschwingungsstrominjektionssteuerprogramm veranlasst, dass die Schritte eines Oberschwingungsstrominjektionsverfahrens nach Anspruch 1 oder 2 durchgeführt werden.

4. Steuervorrichtung für einen Permanentmagnetsynchronmotor, wobei die Vorrichtung ein Signalsammelmodul, einen Speicher, einen Prozessor, einen Proportional-Integral-Regler, einen Controller und ein Oberschwingungsstrominjektionssteuerprogramm, das in dem Speicher gespeichert und auf dem Prozessor ausführbar ist, umfasst, wobei das Signalsammelmodul dazu ausgelegt ist, ein dreiphasiges Stromsignal abzutasten und dieses dann an den Prozessor zu senden, der Prozessor das Oberschwingungsstrominjektionssteuerprogramm ausführt, um ein Spannungssteuersignal auszugeben, und der Controller das Spannungssteuersignal empfängt und dementsprechend eine Spannung des Permanentmagnetsynchronmotors steuert, und
**dadurch gekennzeichnet, dass**
das Oberschwingungsstrominjektionssteuerprogramm veranlasst, dass die Schritte eines Oberschwingungsstrominjektionsverfahrens nach Anspruch 1 oder 2 durchgeführt werden.

## Revendications

1. Procédé d'injection de courants harmoniques pour neutraliser le bruit d'ordre élevé d'un véhicule, le procédé comprenant les étapes suivantes :
(1) obtention des composantes d'axe d et d'axe q d'un courant harmonique de chaque ordre d'une onde fondamentale de chaque onde harmonique dans un système de coordonnées à courant continu après transformation de coordonnées et traitement par filtrage de courants échantillonnés triphasés ;
(2) calcul de valeurs données des composantes d'axe d et d'axe q du courant harmonique de chaque ordre sur la base d'un couple harmonique et d'une vitesse de rotation d'un moteur synchrone à aimants permanents ; et
(3) commande de sorties des composantes d'axe d et d'axe q du courant harmonique de chaque ordre par un régulateur proportionnel-intégral, réalisation d'une régulation en boucle fermée en utilisant des valeurs données des composantes d'axe d et d'axe q d'un 5^{ème} courant harmonique, des valeurs données des composantes d'axe d et d'axe q d'un 7^{ème} courant harmonique, des valeurs données des composantes d'axe d et d'axe q d'un 11^{ème} courant harmonique, et des valeurs données de composantes d'axe d et d'axe q d'un 13^{ème} courant harmonique obtenues à l'étape (2) comme valeurs de référence données pour les boucles de courant harmonique des deux ordres, respectivement, en utilisant des valeurs réelles des composantes d'axe d et d'axe q du 5^{ème} courant harmonique, des valeurs réelles des composantes d'axe d et d'axe q du 7^{ème} courant harmonique, des valeurs réelles des composantes d'axe d et d'axe q du 11^{ème} courant harmonique et des valeurs réelles des composantes d'axe d et d'axe q du 13^{ème} courant harmonique obtenues dans une étape de transformation et d'extraction des courants harmoniques comme valeurs réelles de réaction pour les boucles de courant harmonique des deux ordres, et en utilisant des entrées nettes de leurs différences respectives comme entrées de régulateurs proportionnels-intégraux, puis en soumettant les sorties des régulateurs proportionnels-intégraux, comme valeurs de tensions harmoniques, à une transformation de Park inverse vers un système de coordonnées fondamentales, puis sortie des valeurs des tensions harmoniques et des tensions fondamentales de manière superposée, de telle sorte que le bruit induit par des pulsations de couple d'ordre élevé d'un 6^{ème} ordre et d'un 12^{ème} ordre soit neutralisé, et
**caractérisé par**
le fait d'effectuer le calcul de valeurs données d'une composante d'axe d et d'une composante d'axe q du 5^{ème} courant harmonique et du 11^{ème} courant harmonique à l'étape (2) en combinant les équations de couple électromagnétiques suivantes et en résolvant les équations combinées sous une condition que la composante d'axe d et la composante d'axe q du 7^{ème} courant harmonique et du 13^{ème} courant harmonique soient mises à zéro, ce qui permet de déterminer la composante d'axe d et la composante d'axe q du 5^{ème} courant harmonique et du 11^{ème} courant harmonique pour la superposition suivante du courant harmonique : $\begin{matrix}{T}_{e} = {\sum }_{i = 1.5.11} {I}_{m i} sin \left(i\left(ωt+θ\right)\right) ⋅ \frac{{\sum }_{j = 1.5.7.11.13} {E}_{m j} sin \left(jωt\right)}{Ω} + {\sum }_{i = 1.5.11} {I}_{m i} sin \left(i\left(ωt+θ-\frac{2}{3}π\right)\right) ⋅ \frac{{\sum }_{j = 1.5.7.11.13} {E}_{m j} sin \left(j\left(ωt-\frac{2}{3}π\right)\right)}{Ω} + \\ {\sum }_{i = 1.5.11} {I}_{m i} sin \left(i\left(ωt+θ+\frac{2}{3}π\right)\right) ⋅ \frac{{\sum }_{j = 1.5.7.11.13} {E}_{m j} sin \left(j\left(ωt+\frac{2}{3}π\right)\right)}{Ω} + \frac{3}{2} {n}_{p} \left({L}_{d}-{L}_{q}\right) {I}_{m 1}^{2} sin θ cos θ + {T}_{6} + {T}_{12}\end{matrix}$
où Iₘᵢ représente une valeur d'un courant harmonique du i^{ème} ordre, et Eₘᵢ représente un module d'une force contreélectromotrice harmonique du i^{ème} ordre ; T₆ représente un couple du 6^{ème} ordre, T₁₂ représente un couple du 12^{ème} ordre, Tₑ représente un couple électromagnétique, ω représente une vitesse angulaire électrique du moteur, et Ω représente une vitesse angulaire mécanique du moteur ; et θ représente une phase initiale d'une onde fondamentale, nₚ représente un nombre de paires de pôles du moteur, L_{d} représente une inductance d'axe direct, et L_{q} représente une inductance d'axe en quadrature ;
et le couple du 6^{ème} ordre T₆ et le couple du 12^{ème} ordre T₁₂ s'expriment respectivement sous la forme : ${T}_{6} = \frac{3}{2} {n}_{p} \left({L}_{d}-{L}_{q}\right) \left({i}_{d 1}{i}_{q 5}+{i}_{d 5}{i}_{q 1}\right)$ ${T}_{12} = \frac{3}{2} {n}_{p} \left({L}_{d}-{L}_{q}\right) \left({i}_{d 1}{i}_{q 11}+{i}_{d 11}{i}_{q 1}+{i}_{d 5}{i}_{q 5}\right)$ où ${i}_{d 1} = {I}_{m 1} sin θ$ ${i}_{q 1} = {I}_{m 1} cos θ$ ${i}_{d 5} = {I}_{m 5} sin \left(6ωt+5θ+{θ}_{5}\right)$ ${i}_{q 5} = {I}_{m 5} cos \left(6ωt+5θ+{θ}_{5}\right)$ ${i}_{d 11} = {I}_{m 11} sin \left(12ωt+11θ+{θ}_{11}\right)$ ${i}_{q 11} = {I}_{m 11} cos \left(12ωt+11θ+{θ}_{11}\right)$
où θ₅ représente une phase initiale de la 5^{ème} onde harmonique, et θ₁₁ représente une phase initiale de la 11^{ème} onde harmonique.

2. Procédé d'injection de courant harmonique pour neutraliser un bruit d'ordre élevé d'un véhicule selon la revendication 1, dans lequel l'étape (1) comprend le processus consistant à : échantillonner des courants de phase U, une phase V et de phase W du moteur synchrone à aimants permanents, puis soumettre les courants échantillonnés à une transformation de Clark et à une transformation de Park vers un système de coordonnées tournant synchrone diphasé, pour obtenir des composantes d'axe d et d'axe q d'un courant échantillonné total comprenant les courants harmoniques, faire passer séparément les composantes d'axe d et d'axe q du courant à travers un filtre passe-bas pour obtenir des composantes d'axe d et d'axe q d'un courant fondamental, et calculer une différence entre la composante d'axe d du courant échantillonné total et la composante d'axe d du courant fondamental et une différence entre la composante d'axe q du courant échantillonné total et la composante d'axe q du courant fondamental, de manière à obtenir des composantes d'axe d et d'axe q d'un courant harmonique total dans le système de coordonnées fondamentales ; puis, soumettre les composantes d'axe d et d'axe q du courant harmonique total dans le système de coordonnées fondamental à une transformation de Clark inverse et à une transformation de Park inverse, respectivement, vers le système de coordonnées tournant synchrone pour une onde harmonique de chaque ordre, pour obtenir des formes de courant continu pour les composantes d'axe d et d'axe q de chaque onde harmonique.

3. Support de stockage lisible par ordinateur sur lequel est stocké un programme de commande d'injection de courants harmoniques pour neutraliser le bruit d'ordre élevé d'un véhicule, et
**caractérisé en ce que**
le programme de commande d'injection de courants harmoniques provoque la réalisation des étapes d'un procédé d'injection de courants harmoniques selon la revendication 1 ou 2.

4. Appareil de commande pour moteur synchrone à aimants permanents, l'appareil comprenant un module de collecte de signaux, une mémoire, un processeur, un régulateur proportionnel-intégral, un contrôleur, et un programme de commande d'injection de courants harmoniques stocké sur la mémoire et exécutable sur le processeur, dans lequel le module de collecte de signal est configuré pour échantillonner un signal de courant triphasé puis l'envoyer au processeur, le processeur exécute le programme de commande d'injection de courants harmoniques pour délivrer un signal de commande de tension, le contrôleur reçoit le signal de commande de tension et commande en conséquence une tension du moteur synchrone à aimants permanents, et
**caractérisé en ce que**
le programme de commande d'injection de courants harmoniques provoque la réalisation des étapes d'un procédé d'injection de courants harmoniques selon la revendication 1 ou 2.
